# FASCICULE DE BREVET EUROPEEN

(11) **EP 0 477 072 B1**
(45) Date de publication et mention de la délivrance du brevet: **09.08.1995**
(21) Numéro de dépôt: 91402436.9
(22) Date de dépôt: 13.09.1991
(51) Int. Cl.: G02F 1/015

(54) **Modulateur électrooptique multicouche de lumière**
Mehrschichtiger elektrooptischer Lichtmodulator
Multilayer electro-optical light modulator

(30) Priorité: 21.09.1990 FR 9011677
(43) Date de publication de la demande: 25.03.1992
(73) Titulaire: THOMSON-CSF, 75008 Paris (FR)
(72) Inventeur: Papuchon, Michel, F-92045 Paris la Défense (FR); Delacourt, Dominique, F-92045 Paris la Défense (FR); Puech, Claude, F-92045 Paris la Défense (FR)
(74) Mandataire: Guérin, Michel

(56) Documents cités:
- FR-A- 2 607 628
- APPLIED PHYSICS LETTERS, vol. 50, no. 11, 16 mars 1987, New York, US ; pages 685-687 ; A. HARWIT et al. : "Observation of Stark shifts in quantum well intersubband transitions"
- ELECTRONICS LETTERS, vol. 25, no. 3, 2 février 1989, Stevenage, GB, pages 230-231 ; M.J. KANE et al. : "Novel electro-optic modulation effect at 10 mum wavelength in GaAs/AlGaAs quantum wells"
- SUPERLATTICES AND MICROSTRUCTURES, vol. 4, no. 6, 1988, Londres, GB, pages 737-739 ; M. PATON et al. : "A novel asymmetrically coupled quantum well infrared modulator"
- IEEE JOURNAL OF QUANTUM ELECTRONICS, vol. 25, no. 7, juillet 1989, New York, US, pages 1671-1676 ; P.F. YUH et al. : "Large Stark effects for transitions from local states to global states in quantum well structures"

## Description

L'invention concerne un modulateur de lumière et plus particulièrement un modulateur infrarouge à puits quantiques.

Le domaine couvert par l'invention concerne en effet plus précisément les modulateurs de lumière pour l'infrarouge (par exemple dans la région 3-12 microns).

Les techniques en général employées pour moduler la lumière consistent à utiliser des variations d'indices induites par des champs électriques appliqués (effets électrooptiques), à déplacer les bandes d'absorption sous champs électriques ...

Dans le domaine de l'infrarouge et en particulier si la longueur d'onde est supérieure à 3 microns, l'utilisation d'effets tels que l'effet électrooptique conduit à appliquer des tensions élevées (100 à plusieurs milliers de volts selon que la géométrie est celle de l'optique intégrée ou de l'optique classique).

D'autre part, pour certaines applications, il peut être intéressant de pouvoir disposer de matrices de modulateurs infrarouges (traitement d'images, dispositifs antiéblouissement ... ). Dans ce cas, il est indispensable d'utiliser des longueurs d'interaction courtes et donc des modulateurs à très grandes efficacités.

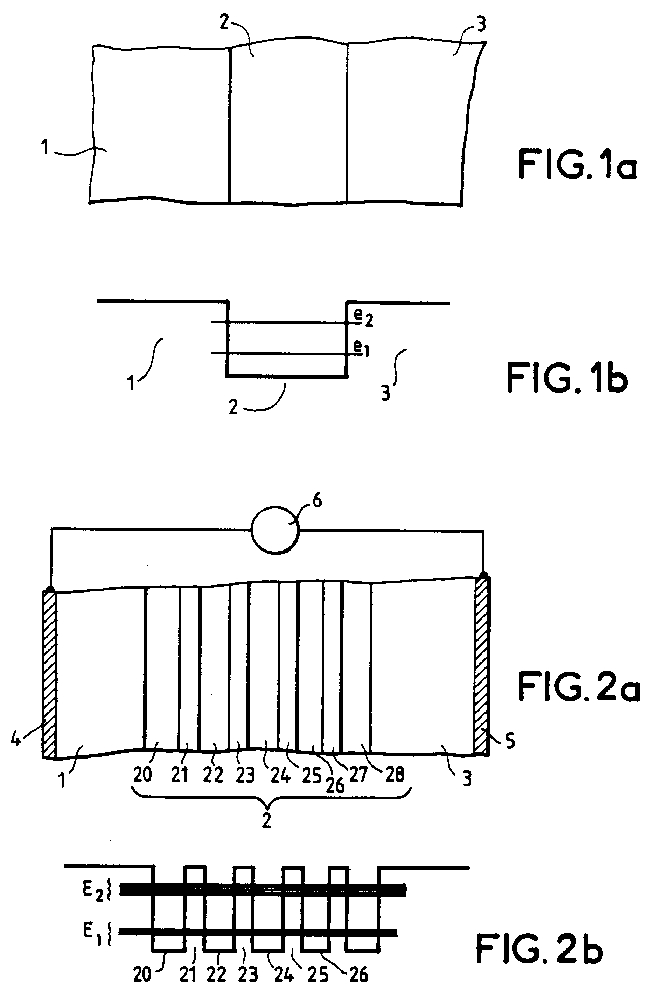

La structure de base de l'invention repose sur l'utilisation de structures à puits quantiques et de l'absorption intrabandes. Il est connu qu'il est possible de réaliser des structures telles que celles de la figure 1a, constituée par l'association de couches de matériaux semiconducteurs 1, 2, 3 d'énergies de bandes interdites différentes comme cela est représenté sur la figure 1b. Si les matériaux sont bien choisis (différence d'énergie de bande interdite au moins égale à l'énergie de photons que l'on veut détecter) on peut, pour une certaine épaisseur du matériau 2, obtenir un puits de potentiel présentant deux niveaux d'énergie e1 et e2 pour les électrons dont l'écart est égal à l'énergie des photons que l'on désire absorber. Si le niveau e1 est peuplé, des photons d'énergie correspondante peuvent induire des transitions électroniques entre les niveaux e1 et e2 et donc être absorbés. Les électrons du niveau e1 peuvent être introduits soit par dopage au cours de la croissance de la structure soit par pompage optique avec des photons de plus grande énergie introduisant des transitions entre les niveaux de la bande de valence et la bande de conduction. Pour augmenter l'efficacité de la structure, on peut multiplier le nombre de puits quantiques et/ou utiliser ces structures dans des configurations du type optique intégrée.

Par l'application d'un champ électrique perpendiculairement au plan des couches, on peut modifier la position des niveaux e1 et e2 et ainsi modifier l'absorption et obtenir un modulateur de lumière. En général, cet effet est très faible. C'est pourquoi, l'invention concerne un modulateur basé sur un principe différent mais toujours réalisé avec des structures à puits quantiques avec l'absorption intrabande.

L'invention concerne donc un modulateur de lumière tel que décrit dans la revendication 1.

Un modulateur de lumière comprenant un superréseau est en fait connu de FR-A-2 607 628. Toutefois, chaque puits ne comporte qu'un seul niveau d'énergie pour les électrons et seules les transitions interbandes sont considérées.

Les différents objets et caractéristiques de l'invention apparaîtront plus clairement dans la description qui va suivre faite à titre d'exemple et dans les figures annexées qui représentent :
- les figures 1a et 1b, un dispositif connu dans la technique et déjà décrit précédemment ;
- les figures 2a, 2b, 3a, 4, un exemple de réalisation simplifié du dispositif de l'invention ;
- les figures 2c et 3b, des courbes explicatives de l'absorption.

La figure 2a représente un exemple de réalisation du dispositif de l'invention qui comporte, sur un substrat 1, un empilement 2 de couches 20 à 28. Les couches 20, 22, 24, 26, 28 et 4 sont en matériau dont l'énergie correspondant au bas de la bande de conduction est inférieur à l'énergie correspondant au bas de la bande de conduction du matériau du substrat (1) ainsi que des couches 21, 23, 25, 27 et 3.

L'empilement 2 constitue donc un empilement de puits quantiques dont le substrat 1 et les couches 21, 23, 25, 27 et 3 sont les barrières. Les constitutions des différents puits sont similaires de façon qu'ils possèdent des caractéristiques similaires. Les épaisseurs des couches 21, 23, 25, 27 sont suffisamment faibles pour qu'en à l'absence de champ électrique, les différents puits soient couplés entre eux. Au lieu d'avoir deux niveaux d'énergie e₁ et e₂ (par exemple) par puits comme dans le cas de la figure 1b, on a une interaction des puits entre eux de telle façon que le premier niveau d'énergie (correspondant au niveau e1) se retrouve dans les autres puits et inversement. Il en est de même pour les niveaux d'énergie correspondant au deuxième niveau.

Dans ces conditions on obtient un profit de la bande de conduction tel que représenté en figure 2b comportant un premier "niveau d'énergie E1" qui est en fait constitué par des sous-niveaux d'énergie résultant du couplage interpuits et un deuxième "niveau d'énergie E2" qui est également constitué de sous-niveaux d'énergie provenant du couplage interpuits.

Dans ces conditions, la structure des figures 2a et 2b est constituée d'un ensemble de puits quantiques séparés par des barrières de potentiel dont la combinaison hauteur de barrières/épaisseurs de barrières est telle que les puits sont couplés et l'ensemble constitue donc un superréseau. Dans ce cas, les niveau d'un puits quantique élémentaire sont décomposés en plusieurs sous niveaux dont le nombre est égal au nombre de puits couplés. L'ensemble de ces sous niveaux constituent une sous bande. Si les puits élémentaires du superréseau comprennent deux niveaux espacés de l'énergie des photons que l'on désire détecter, dans le superréseau, on pourra observer une absorption de ces photons si des électrons ont été placés dans la minibande E1.

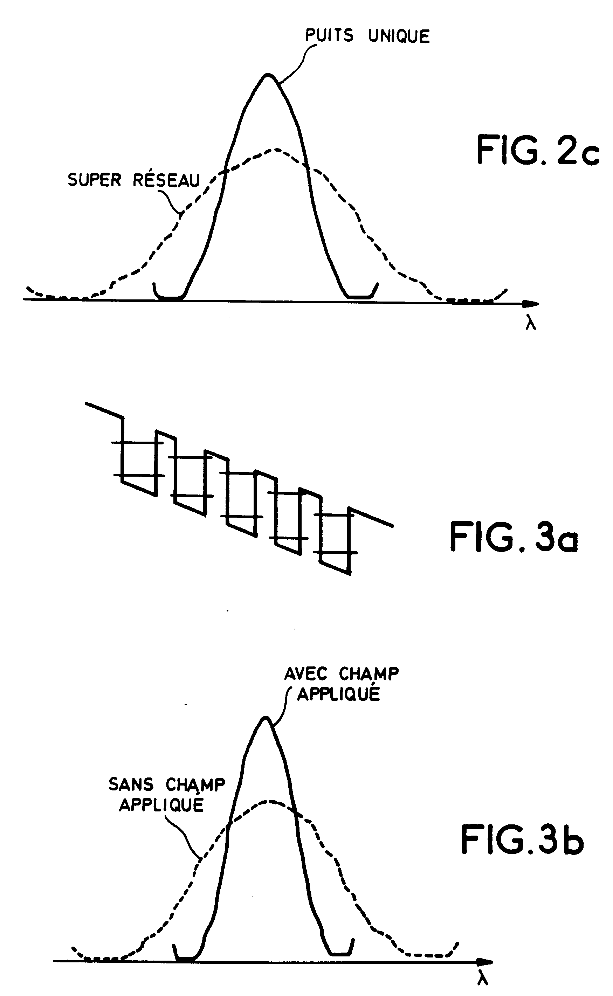

Il existe cependant une différence entre les deux cas (puits "unique" et superréseau). Dans ce cas du superréseau, la largeur de la bande d'absorption est naturellement beaucoup plus grande que dans le cas des puits non couplés. Cette situation est symbolisée sur la figure 2c où on a représenté, en fonction de la longueur d'onde, la courbe d'absorption d'un superréseau de l'invention et la couche d'absorption d'un puits unique tel que celui des figures 1a et 1b.

Le dispositif de la figure 2a possède en outre deux électrodes 4 et 5 disposées de part et d'autre de l'empilement de couches 2. Une source électronique 6 connectée aux électrodes 4 et 5 permet d'appliquer un champ électrique à la structure.

Supposons donc qu'un champ électrique soit maintenant appliqué perpendiculairement au plan des couches. On peut schématiser la situation correspondante par la figure 3a.

Les niveaux d'énergie des puits ne sont plus en alignement et les puits sont maintenant découplés et forment simplement une structure à multipuits quantiques. Les caractéristiques de l'absorption intrabande sont donc les mêmes que celles d'un puits quantique élémentaire (à l'absorption totale près et en supposant la structure parfaite). En particulier, la largeur spectrale est beaucoup plus petite que dans le cas où les puits sont couplés pour former un superréseau. L'application ou non du champ sur la structure modifie donc l'absorption intrabande et permet donc de réaliser un modulateur. La figure 3b illustre cette différence d'absorption et donne pour cela en fonction de la longueur d'onde les courbes d'absorption du dispositif de l'invention avec et sans champ électrique appliqué.

Avec une telle technique, il faut noter que la longueur d'onde optique à moduler n'a pas besoin d'être fixée avec une grande précision ou encore que, pour une longueur d'onde à moduler fixée, les paramètres de la structure sont définis avec une précision moins grande que dans les cas de multipuits quantiques.

On peut, soit réaliser des matrices bidimensionnelles de modulateurs, soit insérer la structure dans un guide d'onde optique (dans ce cas, en général, l'efficacité du modulateur est améliorée).

De plus, la première sous bande peut être peuplée soit par dopage au moment de la croissance, soit par pompage optique (dans l'infrarouge proche par exemple).

Il faut remarquer que les explications développées ci-dessus pour des transitions entre niveaux électroniques dans la bande de conduction sont aussi applicables à des transitions entre niveaux de trous dans la bande de valence.

La structure finale peut être constituée d'un superréseau ou de l'association de plusieurs structures de base identiques non couplées entre elles, le nombre de puits couplés dans chaque structure élémentaire étant au moins égal à deux.

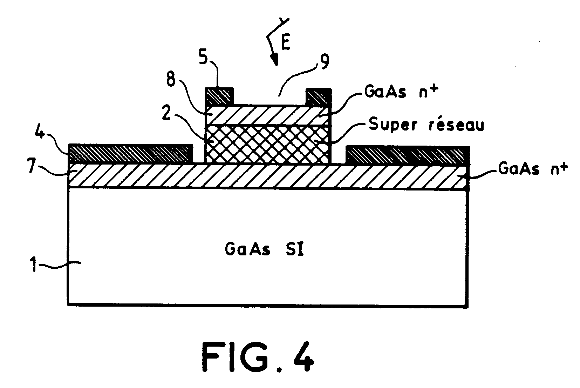

Selon l'exemple de réalisation détaillé de l'invention représenté en figure 4, le superréseau 2 est réalisé sur une couche de contact 7 de GaAs fortement dopée supportée par un substrat 1 en GaAs semi isolant.

A la surface supérieure du superréseau 2 est déposée une couche de contact 8 de GaAs fortement dopée.

Des contacts ohmiques 4 et 5 sont réalisés sur les couches de contact 7 et 8. Le contact ohmique 5 possède une ouverture 9 permettant de recevoir la lumière E à moduler.

La figure 4 présente un exemple de structure pouvant fonctionner à 10. 6 microns et réalisée avec des matériaux du type GaAs/GaA1As. Dans le cas de la figure 4, la largeur des sous bandes E1 et E2 varie entre 0.2 et 2.6 meV à 2.8 et 15 meV environ quand la largeur de la barrière intermédiaire varie de 8 à 4 nanomètres (pour des puits en GaAs de 8 nanomètres d'épaisseur et des barrières avec 28 % d'aluminium), alors que dans le cas de multipuits quantiques découplés ayant les mêmes paramètres, la largeur expérimentale (à température ambiante) à mi hauteur de la courbe d'absorption intrabande est de 10 meV environ.

Dans les dispositifs décrits précédemment, le peuplement des niveaux initiaux se fait soit par dopage des couches constituant les puits quantiques, soit par éclairement à l'aide d'un faisceau lumineux réalisant un pompage optique entre la bande de valence et la bande de conduction.

Il est bien évident que la description qui précède n'a été faite qu'à titre d'exemple et que d'autres variantes peuvent être envisagées. Les exemples numériques et de matériaux n'ont été fournis que pour illustrer la description.

## Revendications

1. Modulateur de lumière comportant un ensemble de puits quantiques séparés par des barrières formant ainsi une structure en couches, les barrières étant telles qu'en absence d'application de champ électrique par un dispositif d'application de champ électrique ces puits soient couplés et constituent un superréseau, caractérisé en ce que chaque puits quantique est en matériau déterminé et d'épaisseur déterminée pour obtenir un puits de potentiel présentant deux niveaux d'énergie (e1 et e2) pour les électrons dont l'écart est égal à l'énergie des photons que l'on désire absorber, le dispositif d'application de champ électrique pouvant être connecté aux bornes de la structure et permettant d'appliquer un champ électrique perpendiculairement au plan des couches de la structure de façon que les niveaux d'énergie de chaque puits ne soient plus alignés avec les niveaux d'énergie des puits voisins et que les puits soient ainsi découplés.

2. Modulateur selon la revendication 1, caractérisé par le fait qu'il prévoit un peuplement des niveaux initiaux soit par dopage initial soit par pompage optique entre la bande de valence et la bande de conduction.

## Patentansprüche

1. Lichtmodulator mit einer Gruppe von durch Barrieren getrennten Quantensenken in Schichtstruktur, wobei die Barrieren so ausgebildet sind, daß, solange eine Vorrichtung kein elektrisches Feld anlegt, die Senken gekoppelt sind und ein Supernetzwerk bilden, dadurch gekennzeichnet, daß jede Quantensenke aus einem bestimmten Material besteht und eine bestimmte Dicke besitzt, um eine Potentialsenke mit zwei Energieniveaus (e₁ und e₂) für die Elektronen zu ergeben, deren Abstand der Energie der zu erfassenden Photonen gleicht, wobei die Vorrichtung zum Anlegen eines elektrischen Felds an die Klemmen der Struktur anschließbar ist und ein solches Feld senkrecht zur Ebene der Schichten der Struktur anlegen kann, daß die Energieniveaus jeder Senke nicht mehr mit den Energieniveaus der benachbarten Senken fluchten und die Senken somit entkoppelt sind.

2. Modulator nach Anspruch 1, dadurch gekennzeichnet, daß eine Besetzung des ursprünglichen Niveaus mit Ladungsträgern entweder durch Dotierung bei der Herstellung oder durch optisches Pumpen zwischen dem Valenzband und dem Leitband erfolgt.

## Claims

1. Light modulator including a set of quantum wells separated by barriers thus forming a layer structure, the barriers being such that, in the absence of an electric field applied by an electric-field application device, these wells are coupled and constitute a super-lattice, characterized in that each quantum well is made of a material and is of a thickness which are determined in order to obtain a potential well exhibiting two energy levels (e1 and e2) for the electrons, the spacing of which is equal to the energy of the photons which it is desired to absorb, the electric-field application device being able to be connected to the terminals of the structure and making it possible to apply an electric field perpendicularly to the plane of the layers of the structure so that the energy levels of each well are no longer aligned with the energy levels of the neighbouring wells, and so that the wells are thus decoupled.

2. Modulator according to Claim 1, characterized in that population of the initial levels is provided either by initial doping or by optical pumping between the valence band and the conduction band.
